# EUROPEAN PATENT SPECIFICATION

(11) **EP 3 648 795 B1**
(45) Date of publication and mention of the grant of the patent: **13.11.2024**
(21) Application number: 18916900.6
(22) Date of filing: 05.12.2018
(51) Int. Cl.: C10G 17/02, C10G 19/00, C10G 19/02, C10G 29/02, C10G 29/04, C02F 5/12, C02F 101/10

(54) **CHEMICAL COMPOSITIONS AND METHODS FOR REMEDIATING HYDROGEN SULFIDE AND OTHER CONTAMINANTS IN HYDROCARBON BASED LIQUIDS WITHOUT FORMATION OF PRECIPITATE**
CHEMISCHE ZUSAMMENSETZUNGEN UND VERFAHREN ZUR BESEITIGUNG VON SCHWEFELWASSERSTOFF UND ANDEREN VERUNREINIGUNGEN IN FLÜSSIGKEITEN AUF KOHLENWASSERSTOFFBASIS OHNE BILDUNG VON AUSFÄLLUNGEN
COMPOSITIONS CHIMIQUES ET PROCÉDÉS POUR RÉDUIRE LA TENEUR EN SULFURE D'HYDROGÈNE ET AUTRES CONTAMINANTS DANS DES LIQUIDES À BASE D'HYDROCARBURES SANS FORMATION DE PRÉCIPITÉS.

(30) Priority: 23.04.2018 US 201862661289 P; 25.07.2018 US 201862702960 P; 13.09.2018 WO PCT/US2018/050913
(43) Date of publication of application: 13.05.2020
(73) Proprietor: Gaps Technology, LLC, Slidell, LA 70458 (US)
(72) Inventor: ROE, Cliffton, Harrison Township, MI 48045-3559 (US); SCHWEITZER, Linda, Rochester Hills, MI 48306 (US)
(74) Representative: EDP Patent Attorneys B.V.
(86) International application number: PCT/US2018/064015
(87) International publication number: WO 2019/209379

(56) References cited:
- WO-A2-2019/036731
- US-A- 3 931 394
- US-A- 4 515 759
- US-A- 5 595 750
- US-A1- 2008 039 344
- US-A1- 2014 374 104
- US-A1- 2015 037 274
- No further relevant documents disclosed
- LOUIS D ELLIOT: "The freezing point curve of the system water-ammonia", THE JOURNAL OF PHYSICAL CHEMISTRY, vol. 28, no. 8, 1 August 1924 (1924-08-01), pages 887 - 888, XP055648108

## Description

### CROSS-REFERENCE TO RELATED APPLICATIONS

The present application claims the benefit of priority to US Provisional Patent Application Nos. 62/661,289, filed April 23, 2018 and 62/702,960, filed July 25, 2018, as well as to International Application WO 2019/036731 A2, filed 13 September 2018, which claims priority to US Provisional Patent Application No. 62/539,699, filed August 01, 2017

### BACKGROUND OF THE INVENTION

### 1. FIELD OF THE INVENTION

The present invention relates to novel treatment solutions and methods of using same for treating and remediating sulfur-containing compounds, primarily including hydrogen sulfide (H₂S), and other contaminants in hydrocarbon-petroleum based liquids and contaminated aqueous solutions comprising a crude oil, as further defined in the accompanying claims, and substantially without formation of any precipitates, scaling or the like. More particularly, the present invention relates to such treatment solutions and methods in which the treatment solutions are added to the hydrocarbon - petroleum based liquids or contaminated aqueous solutions as further defined in the accompanying claims in a controlled and efficient manner which safely and efficiently remediates the contaminants down to acceptable levels, substantially without the formation of any precipitates, scaling or the like, and without otherwise detrimentally affecting the hydrocarbon - petroleum based liquids or contaminated aqueous solutions as further defined in the accompanying claims in any significant manner.

### 2. BACKGROUND ART

Sulfur-containing compounds including hydrogen sulfide (H₂S) have long been recognized as undesirable contaminants in hydrocarbon or petroleum based liquids such as crude oil and liquified petroleum gas (LPG), as well as in contaminated aqueous solutions such as solutions extracted from the earth along with crude oil, natural gas and the like, which aqueous solutions may also be contain significant concetrations of salts and be considered brine. Herein "hydrocarbon based liquid" is used to indicate any hydrocarbon based liquid, including petroleum based liquids, as further defined in the accompanying claims, comprising a crude oil. Examples of hydrocarbon based liquids which may be treated with the treatment solutions and treatment methods of the present invention include those containing molecules of CH₉ to CH₃₂. H₂S is a particularly undesirable contaminant because it is highly toxic, corrosive, etc. and generally petroleum based liquids such as crude oil should contain less than five ppm H₂S in order to be acceptable for refining or other processing. While the amount of H₂S in hydrocarbon based liquids can range from a few ppm to more than 100,000 ppm, crude oil from the ground typically contains ≤ 40,000 ppm H₂S, most often ≤ 2000 ppm H₂S, and will generally be somewhat acidic with a pH about 5 to 6. The H₂S may be present in several forms, including H₂S dissolved in a liquid, H₂S as mercaptan sulfur and H₂S content in vapor, but the majority is typically present as H₂S content in vapor, particularly at higher concentrations, and the release of H₂S in vapor or gaseous form is particularly toxic and dangerous.

Generally, much of the H₂S in a hydrocarbon based liquid, such as crude oil, is in gaseous or vapor form. H₂S gas has much greater solubility in hydrocarbon based liquids than in water, and at the high pressures at which crude oil exists underground, it is possible for the crude oil to have thousands and tens of thousands of ppm H₂S therein. However, when the crude oil is brought up to ambient or atmospheric pressure much of the H₂S gas therein may be released from the crude oil according to Henry's Law, and hence the need to remediate the H₂S and prevent it from being released. The amount of soluble and gaseous H₂S which can be in aqueous solutions is less than the amount which may be in hydrocarbon based liquids, but it still can be present in hundreds and thousands of ppm, and contaminated aqueous solutions will typically contains ≤ 1000 ppm H₂S. Generally, H₂S is an acidic compound, crude oil as extracted from the ground and containing a typical amount of H₂S, e.g. ≤ 2000 ppm, which is mostly in the form gas dissolved in the crude oil, has a moderately acidic pH of about 5 - 5.5. Gaseous H₂S does not exist in solution above a pH of about 7.

There are many known methods for remediating sulfur-containing compounds, including H₂S, from crude oil and other liquids. US 2008/039344 A1, for instance, describes a composition and method for removing a sulphur compound or carbon dioxide from a substance and methods for its use, said composition comprising a metal at between about 0.5 to 25 percent by weight, a base at between about 1 to 99 percent by volume, a chelating agent at between about 0.1 to 50 percent by weight and water. Further, for example, M. N. Sharak et al., Removal of Hydrogen Sulfide from Hydrocarbon Liquids Using a Caustic Solution, Energy Sources, Part A: Recovery, Utilization, and Environmental Effects, 37:791-798, 2015, discuss that: the known methods include amine processes involving monoethanolamine (MEA), triazine, etc., treatment involving use of caustic material, iron oxide process, zinc oxide, molecular sieve, potassium hydroxide, and a hydrodesulphurization process; the amine treatment is usually the most cost effective choice for gas sweetening when significant amounts of acid gases exist; scrubbing of hydrogen sulfide using sodium hydroxide solution is a well established technology in refinery applications; caustic wash process is commonly used as a preliminary step in sweetening liquid hydrocarbons; and since the used solvent in this process cannot be easily regenerated, caustic scrubbers are most often applied where low acid gas (H2S) volumes must be treated.

H₂S abatement achieved by a conventional amine treatment process which uses an amine such as monoethanolamine (MEA) or triazine for treating H₂S in crude oil. However, with the conventional amine treatment process, while the H₂S may be initially remediated or abated down to acceptable levels, the sulfur contained in the treated oil may undesirably revert back to H₂S over time, especially if the treated oil is heated. Somewhat similarly, it is also known that there are bacteria which ingest sulfur compounds, and hence may reduce the amounts of sulfur contaminants in hydrocarbon based liquids or contaminated aqueous solutions. However, when the bacteria die and decompose this undesirably releases the sulfur back into the hydrocarbon based liquids or contaminated aqueous solutions.

A typical caustic treatment used to remediate H₂S in crude oil involves use of a caustic aqueous solution consisting of up to 20% NaOH by weight. The water and caustic material are used to extract H₂S from the crude oil into solution, dissociating H₂S to HS- ion at higher pH, which shifts the equilibrium of H₂S gas from oil to water. Then, the HS- can react with sodium to form NaHS (sodium bisulfide), or with S₂- to form Na₂S (sodium sulfide), for example, plus water as a byproduct according to the following equations.

H₂S + NaOH → NaHS + H₂O (1)

NaHS + NaOH → Na₂S + H₂O (2)

Generally, the conventional caustic treatment methods are limited to using caustic solutions of only up to 20 weight percent NaOH because the conventional methods are designed and intended to be partly a liquid-liquid extraction, and partly a chemical reaction to convert the H₂S gas to a solid sulfurous species. It is conventionally understood that a certain amount of water is needed to permit the chemical reactants to contact with the crude oil or other petroleum based liquid. The larger amounts of water contained in the conventional caustic treatment solutions permit a greater amount of liquid-liquid extraction. Also, it is known that use of excessive amounts of NaOH may damage the crude oil, as well as metal components used handling the crude oil such as pipes and tanks.

Additionally, some of the H₂S may be converted into sulfur dioxide (SO₂) gas, e.g., upon stirring which allows air containing oxygen to get into the oil, which may be released from the treated petroleum based liquid, depending on the pressure under which the treated liquid is kept. Generally, hydroxides including NaOH are reducing agents and would not produce sulfur dioxide or elemental sulfur if the treated hydrocarbon based liquid is not exposed to air. However, if the oil is exposed to air, the sulfide/bisulfide can be oxidized to SOz or to elemental sulfur. All sulfide species are the same oxidation state (-2) and NaOH is not changing the oxidation state. Similar reactions would occur for other hydroxides included in the treatment solution. Relative to any such sulfur dioxide (SOz) gas, as well as any other gases that may be released from the treated crude oil, it would be necessary as a safety measure to provide some head space in a closed tank or other closed vessel transporting the treated liquid to assure that the pressure does not get excessively high.

Recently, the present inventors have proposed another treatment process, as set forth in US Provisional Patent Application No. 62/539,699 and International Application WO 2019/036731 A2, for efficiently remediating sulfur-containing compounds, including H₂S, from hydrocarbon based liquids including crude oil, and from contaminated aqueous solutions, using an aqueous treatment solution containing primarily a high concentration of one or more hydroxides such as sodium hydroxide (NaOH) and potassium hydroxide (KOH), e.g., collectively the hydroxides account for 35-55 weight percent, and preferably at least 45 weight percent of the treatment solution, which efficiently react with H₂S to convert it to non-toxic substances. Such treatment solution according to the recent proposal is highly alkaline with a pH of 13 - 14. In such treatment process the treatment solution is added to the hydrocarbon based liquids or aqueous solutions being treated at appropriate dosage rates depending on multiple factors, and the hydroxide(s) in the solution efficiently remediate the H₂S and other sulfur-containing compounds down to acceptable levels within relatively short time periods, and without otherwise detrimentally affecting the hydrocarbon - petroleum based liquids or contaminated aqueous solutions in any significant manner. The recently proposed treatment solution may further include one or more other components depending on the specific characteristics of the liquids being treated, and other factors relating to the remediation treatment process, but the high concentration of hydroxide(s) and efficient remediation of H₂S by the hydroxides is the primary aspect of the recent proposal.

The inventors' recently proposed treatment process is based on their discovery that the conventional treatment methods using an aqueous solution consisting of up to 20% NaOH by weight is inefficient for remediating H₂S, and that the H₂S in contaminated liquids can be much more efficiently remediated using their proposed treatment solution containing a much higher collective concentration of one or more hydroxides. The inventors' recently proposed treatment process is not a wash type process, but involves rapid chemical reactions that greatly reduce the mass transfer of the gas to aqueous phase. What the treatment process does differently in comparison to the conventional treatment processes for remediating H₂S in hydrocarbon based liquids, is to essentially reduce the initial amount of water being added via the treatment solution to the minimum effective amount.

While it is known that H₂S gas is more soluble in oil than in water and that a rate-limiting step in the remediation of H₂S from crude oil is typically the mass transfer of H₂S from the oil phase into the aqueous phase, the inventors have discovered that: 1) the liquid-liquid extraction aspect of the conventional methods is actually not that important in comparison to the chemical reaction aspect, e.g., because the initial solubility of H₂S into water, as given by Henry's Law, is low; 2) the larger amounts of water used in aqueous treatment solutions according to the conventional methods also function to dilute the NaOH and transfer the H₂S from the hydrocarbon liquid into the water without abating the H₂S, which is undesirable because this slows the process needed to produce ionized HS- and S₂- ions that allow more of the H₂S contained in the petroleum liquids into solution, and 3) it is much more efficient and effective to remove the H₂S primarily though a chemical reaction process and to a much lesser degree a liquid-liquid extraction. The present inventors have also discovered that since the chemical reactions involved between hydroxides and H₂S, e.g., equations (1), (2) above, produce water, the produced water can readily diffuse through the hydrocarbon based liquid being treated as it is produced because the caustic solution has good migration tendencies in many hydrocarbon based liquids and the diffusion may also be enhanced by agitation and/or heating of the treated liquids. Correspondingly, they determined that it is unnecessary to add any significant amount of water in the treatment process apart from the water in the treatment solution in order for the hydrocarbon based liquid to be effectively treated for remediation of sulfur-containing contaminants, including H₂S, and other contaminants therein. Relative to the inventors' discovery 1), it should be noted that equation (2) above is reversible, so large amounts of water hydrolyze the sodium sulfide (Na₂S) back to NaOH and NaHS. In other words, equation (2) in the reverse direction is a hydrolysis reaction.

The inventors' recently proposed treatment process may involve use of only one hydroxide such as sodium hydroxide (NaOH) or potassium hydroxide (KOH), but may also involve use of a combination of hydroxides for more completely reacting with most or all of the sulfides in the petroleum based liquids, noting that there are more than 300 species of sulfur compounds, although hydrogen sulfide H₂S is by far the main contaminant that must be remediated. For example, some other species of undesirable sulfur compounds include ethyl mercaptan (CH₃CH₂SH), dimethyl sufide (C₂H₆S), isobutyl mercatan (C₄H₁₀S) and methyl thiophene (C₅H₆S). Sodium hydroxide is very effective for use in the treatment solution because it does not harm the petroleum based liquids when used in appropriate amounts, and is relatively inexpensive. Potassium hydroxide is more effective than sodium hydroxide for reacting with some species of sulfides. Hence, the treatment process involving potassium hydroxide (KOH) together with the sodium hydroxide achieves a more complete reaction with all of the sulfides contained in the hydrocarbon based liquids in comparison to just using a concentrated solution of sodium hydroxide.

In an exemplary treatment process for remediating contaminated liquids according to the inventors' recent proposal, their treatment solution may be added at a standard dosage rate of 0.25 - 6.0 ml of the treatment solution / liter of the liquid being treated, preferably 1.0-5.0 ml of the treatment solution /liter of the liquid being treated, which corresponds to approximately 125-3000 ppm of hydroxide(s) in the liquid being treated based on the discussed concentration of hydroxide(s) in the solution. The discussed standard dosage rate is generally effective for remediating H₂S concentrations up to down to safe, acceptable levels. 40,000 ppm H₂S may be experienced in some hdrocarbon based liquids such as crude oil, although contaminated aqueous solutions typically have a much lower H₂S concentration such as 2000 ppm or less. If the amount of the treatment solution added is below 0.25 ml/liter of liquid being treated, sufficient remediation of H₂S may not be archived, and the reactions between the treatment solution and the sulfide compounds in the hydrocarbon based liquid may not proceed quickly and/or efficiently. If the concentration of H₂S is higher than 40,000 ppm it may be necessary to increase standard dosage amount of the recently proposed treatment solution appropriately, which may generally involve linear scalability. Dosage levels above 6.0 ml of the treatment solution / liter of the liquid being treated generally do not further reduce H₂S levels in the treated liquids where reaction times are not a consideration, but can advantageously reduce required reaction times if so desired.

Within the discussed standard dosage rate range, a most appropriate dosage amount of the treatment solution to be added to a contaminated liquid during the treatment process may be determined based on a few considerations, e.g., the amounts of H₂S and other contaminants in the liquid that need to be remediated, other characteristics of the liquid including its viscosity or API density (the term API as used herein, is an abbreviation for American Petroleum Institute), desired reaction rate/time, specific result desired including whether precipitate(s) are to be formed and released from the liquid, and whether the treated liquid is being mixed and /or heated during the treatment process. For example, mixing at moderate to high speeds to rapidly disperse the treatment solution throughout the treated liquid may reduced required reaction time by 50%, whereas some highly viscous liquids such as bunker fuel may require heating to permit proper dispersion of the treatment solution therein. The appropriate dosage rate is substantially, linearly scalable in relation to most or all of the various characteristics within the standard dosage rate range.

Advantageously, the recently proposed treatment process is generally efficient and effective as long as the amount of the treatment solution added is within the discussed standard dosage rate range, whether or not the amount of treatment solution added is the most appropriate dosage amount for the given liquid being treated. Further, use of higher amounts of the treatment solution may be desirable in some situations, and generally will not cause any significant problems or complications, although higher dosage amounts generally tend to cause precipitate(s) to be generated and released from the treated liquids, which would be undesirable for the present invention which seeks to avoid formation of precipitate(s), scale and the like from the treated liquids for a period of time. For example, the inventors have further determined that if an intentionally excessive dosage of the recently proposed treatment solution is added to a liquid being treated such as 2-5 times the standard dosage rates discussed above, this will likely cause remediated contaminants and other contaminants in the treated liquid to precipitate out of the treated liquid, which may be desirable in some situations. Also, depending on how much of the treatment solution is used in excess of the standard dosing rate, this may generate different precipitates which separate out of the treated liquid so that the outcome may be controlled in desired manners, e.g., at 2 times the standard dosing rate a hydrate of sodium sulfide such as Na₂S·9H₂O may precipitate out of the treated liquid according to the reaction (2) above, while at a higher dosage rate of 3 to 5 times the standard dosage rate, this may cause elemental sulfur to precipitate out of the treated liquid. Otherwise, the excess dosages of hydroxides in the treatment process will increase the cost of the treatment, but generally do not have any significantly adverse effects on the treated hydrocarbon based liquids and aqueous solutions. However, application of a very excessive amount of the solution, e.g., ten times the normal amount, may render the treated petroleum based liquid caustic which could be damaging to metals such as steel and aluminum used for containing and transporting the treated liquids.

Reaction times for the inventors' recently proposed treatment process are typically within a relatively short time period such as 15 minutes - 24 hours after such treatment solution is added to the liquid at the discussed dosage rate, whether the liquid being treated is a hydrocarbon based liquid such as crude oil or a contaminated aqueous solution. Within such time period, the hydroxide(s) in the solution remediate the H₂S and other sulfur based contaminants down to safe, acceptable levels such as 5 ppm or less, and without generating or releasing any particularly harmful substances. For example, when the treatment solution includes sodium hydroxide (NaOH) as the primary hydroxide therein, e.g., at least 90 % of all hydroxides in the solution, much of the H₂S, e.g., at least 60% is converted into sodium bisulfide (NaHS) according to the reaction (1) above, which remains dissolved in the treated petroleum liquid, and does not create any significant problems that would need to be addressed. Additionally, some of the H₂S may be converted into sulfur dioxide (SOz) gas which may be released from the treated petroleum based liquid, depending on the pressure at which the treated liquid is kept.

Very desirably, the recently proposed treatment process is generally not reversible in relation to the H₂S and other sulfur contaminants which have been remediated, e.g., even if the treated liquid is heated up to 180° F (i.e. 82.2 °C) for a period of days or weeks, any remediated sulfur compounds remaining in the treated liquids do not revert back to H₂S. Some conventional treatment processes for remediating H₂S are undesirably reversible, includeing the conventional amine treatment process which uses an amine such as MEA or triazine for treating H₂S in crude oil. For example, with the conventional amine treatment process, while the H₂S may be initially remediated or abated down to acceptable levels, the sulfur contained in the treated oil may undesirably revert back to H₂S over time, especially if the treated oil is heated. Conversely, when crude oil which initially contained about 1000 ppm H₂S was treated according to a treatment process using the treatment solution according to the inventors' recent proposal at a dosing rate of 3 ml / liter of oil and the H₂S was abated down to about 0 ppm and essentially none of the sulfur precipitated out of the oil, the treated crude oil was heated up to 180 - 300 °F or 82.2 - 148.9 °C for periods of hours, days and weeks, the resulting oil still contained about 0 ppm H₂S. Essentially none of the sulfur compounds(s) in the treated liquid reverted back to H₂S.

The recently proposed treatment process may be conveniently carried out essentially wherever the contaminated liquids may be present, e.g., in open bodies of the liquids, in conjunction with a transport tanker or other vessel in which the liquids are being transported, at a wellhead where the liquids are being extracted from the ground, in open or closed tanks, in an enclosed pipeline through which the contaminated water or other liquid is being transported, etc.

While the known methods for remediating sulfur-containing compounds, including H₂S, from hydrocarbon based liquid and aqueous solutions, especially the methods and treatment solutions according to the present inventors' recent proposal are generally effective for remediating the H₂S and other contaminants in the liquids, they remain to be improved on, particularly in relation to preventing formation of precipitate(s), scaling and the like from the treated liquids. There remains in the art a need for treatment solutions and treatment methods for remediating sulfur-containing compounds, including H₂S, from hydrocarbon based liquid comprising crude oil, where such treatment solutions and methods are improved in terms of effectiveness in completely remediating the sulfide compounds, as well as in terms of efficiency in quickly remediating the sulfide compounds at a reasonable cost, while generating essentially no precipitate(s), scaling and the like in the treated liquids. There is also a need for flexibility in the ability to perform the treatment method at essentially any location, e.g., directly at a well head or an oil field where crude oil is being extracted, while the crude oil is being transported to a refinery, or other location.

### SUMMARY OF THE INVENTION

An object of the present invention is to satisfy the above needs in the art.

According to a first aspect of the present invention, a treatment solution and treatment process according to the present inventors' recent proposal are modified to include, or is used in combination with, other component(s) which generally are not involved in remediating the H₂S and other contaminants, but function to better assure that no precipitates, scale and the like will be generated from the treated hydrocarbon based liquids or contaminated aqueous solutions as further defined in the accompanying claims for a period of time such as hours, days, or months. Most notably, according to the first aspect of the present invention an appropriate amount of one or more organic acids, such as fulvic acid and humic acid, is added to the liquid being treated together with an appropriate dosage of a treatment solution according to the present inventors' recent proposal. The first aspect of the invention is further defined by the accompanying claims. Use of the organic acid(s) together with the recently proposed treatment solution assures that the treatment process will not only remediate the undesired contaminants, including H₂S, in the liquids being treated in a safe, controlled and efficient manner down to levels deemed to be safe or below, but will do so substantially without formation of any precipitate(s), scale or the like while the liquids are being treated, transported, and stored for a period of time such as hours, days or weeks.

In the treatment process according to the first aspect of the present invention, the remediated sulfide compounds mostly remain in the treated liquids, but in the form of other sulfur based compounds which are not toxic or highly dangerous, unlike the H₂S before the remediation.

In the treatment process according to the first aspect of the present invention, the organic acid(s) and recently proposed treatment solution may be separately added to the liquid being treated or, in the alternative, the organic acid(s) may be added to the recently proposed treatment solution to form a modified treatment solution, which is then added in an appropriate dosage amount to the liquid being treated. The alternative approach is more convenient as a practical matter because the modified treatment solution may be prepared in advance at any convenient location, transported in a single container to another location where it is added to the liquid being treated, and permits all components to be added to the liquid being treated in a single dosage. Further, testing shows that even if the several components are mixed together to form a modified treatment solution and the modified solution is stored for a month or so, there are no appreciable changes to the composition of the modified solution and it remains effective for use in remediated contaminated hydrocarbon based liquids and contaminated aqueous solutions as further defined in the accompanying claims.

In such treatment process according to the first aspect of the present invention, the standard dosage of the inventors' recently proposed treatment solution, i.e., within a range of 0.25 - 6.0 ml / liter of the liquid being treated, preferably within a range of 1.0 - 5.0 ml / liter of the liquid being treated, is effective for safely and efficiently remediating the H₂S and other contaminants therein down to appropriate levels within a period of time such as 15 minutes - 24 hours without creating any significant problems for the treated liquids, substantially the same as in the recently proposed treatment process. Again, the most appropriate dosage rate base within the discussed range will be based on specific characteristics of the treated liquid and other factors as discussed above. However, according to the first aspect of the present invention an appropriate amount of the organic acid(s) is also added to the treated liquid at a dosage rate that will typically result in a concentration of the organic acid(s) in the liquid being treated being in a normal range of 0.01 - 10 ppm, preferably 0.1- 3 ppm, whether the liquid is a hydrocarbon based liquid or contaminated aqueous solution as further defined in the accompanying claims. Within such range, the most appropriate dosage rate of the organic acid(s), like the most appropriate dosage rate of the recently proposed treatment solution, largely depends on : 1) die amount of H₂S and other sulfur containing contaminants in the liquid being treated; 2) the viscosity of the liquid; and 3) the amount of time permitted for reacting the treatment solution with the liquid being treated, although heating and/or mixing of the liquid being treated will reduce the viscosity of the liquid and will also reduce the amount of time required for properly remediating the H₂S and other contaminants in the liquid. The dosage amount of organic acid(s) is substantially, linearly scalable within the discussed range based on these factors.

In the recently proposed treatment process which adds only a standard dosing rate of the treatment solution according to the present inventors' recent proposal to a liquid being treated, there may be little or no precipitate(s), scaling or the like formed from the treated liquids, but even small amounts of precipitate(s), scaling or the like may be undesired or unacceptable in some situations. In the treatment process according to the first aspect of the present invention, however, the organic acid(s) which are also added to the liquids being treated assure that substantially no precipitate(s), scaling or the like will be formed from the treated liquids while they are are being treated, transported and/or stored for a period of time such as hours, days or weeks. Further, to any extent that there is a increased likelihood that precipitate(s), scaling or the like may be formed in a treated liquid, e.g., the treated liquid contains an especially high content of H₂S and other sulfides requiring a larger dosage of the treatment solution according to the inventors' recent proposal and/or the liquid being treated contains a high content of rag components such as organic matter, an increased amount of the organic acid(s) may be added to the treated liquid beyond the normal range of 0.01 - 10 ppm, preferably 0.1- 3 ppm, to assure that substantially no precipitate(s), scaling or the like will be formed.

One particular application in which it is very important to assure that no precipitates, scale and the like will be generated from the treated hydrocarbon based liquids is when crude oil directly from the ground is being transported via tanker truck or other vessel to a major pipeline, which then transports the crude oil to a refinery. The major pipeline generally will not accept crude oil containing more than 5 ppm H₂S. By treating the crude oil with a standard dosage of the treatment solution according to the present inventors' recent proposal, this would be effective to reduce the H₂S content down to 5 ppm or less, but it is quite possible that there would be some precipitates and/or scaling will be formed or deposited on surfaces of the tanker truck or other vessel transporting the crude oil, which would be undesirable. However, by also adding an appropriate amount of the organic acid(s) to the treated liquid according to the first aspect of the present invention, this assures that essentially no precipitates or scaling will be formed from the treated hydrocarbon based liquids, including crude oil, as further defined in the accompanying claims. Significantly, the treatment solution and process according to the present invention do not have any particularly detrimental effects on the treated liquids, but do significantly improve some characteristics of the treated liquid beyond remediating the H₂S and other contaminants down to safe, acceptable levels. For example, a treated hydrocarbon based liquid, such as crude oil, as further defined in the accompanying claims will not only have H₂S levels reduced to substantially zero, but will also have a substantially neutral pH of about 7, so that it will cause less problems for the transporting vessel, the major pipeline and the distillation process in comparison to the untreated crude oil which will typically include up to 2000 ppm H₂S and have a somewhat acidic pH of 5 - 5.5. Further, testing performed on treated crude oil shows that the content of light end components of the treated crude oil, including benzene, tends to be improved - increased somewhat by the treatment process. Moreover, the treated crude oil having improved characteristics will typically be more valuable than the untreated crude oil and can be sold at a higher price, e.g., $5 to $10 per barrel. While the treated crude oil may contain some residual amounts of hydroxide(s), organic acid(s), and/or other components added during the treatment process, these are not particularly harmful to crude oil itself, the transporting vessel and the major pipeline.

According to a second aspect of the present invention, a treatment process according to the present inventors' recent proposal is further modified by also adding a small amount of monoethanolamine or MEA (C₂H₇NO) to the treated liquid, along with appropriate amounts of the recently proposed treatment solution and of the organic acid(s) such as discussed in relation to the first aspect of the present invention. An appropriate small amount of the MEA to be added in the treatment process according to the present invention will typically correspond to a concentration of 0.5 - 15 ppm, and preferrably 1.0 - 10 ppm, of the MEA in the hydrocarbon based liquid or aqueous solution as further defined in the accompanying claims being treated. Within such range, again, a most appropriate dosage rate for the MEA largely depends on a few factors, e.g., 1) the amount of H₂S and other sulfur containing contaminants in the liquid being treated; 2) the viscosity of the liquid being treated; and 3) the amount of time permitted for reacting the treatment solution with the liquid being treated, while noting that heating and/or mixing of the treated liquid will typically reduce the viscosity of the liquid and reduce reaction time required for sufficiently remediating the H₂S and other contaminants in the treated liquids. The amount of MEA is generally, linearly scalable within the discussed range based on these three factors.

MEA added in small amounts to the treated liquids according to the effectively functions as an anti-scaling agent and is also more effective at remediating some species of sulfur compounds than are the hydroxide(s) in the recently proposed treatment solution. Hence, the treatment process including MEA according to the present invention achieves a more complete remediation of various species of sulfur containing compounds.

This is different from the conventional amine treatment process in which relatively large amounts of MEA are added to hydrocarbon based liquids such as crude oil as the primary component to remediate the H₂S in the hydrocarbon based liquids. MEA exothermically reacts with hydroxide(s) such as NaOH and KOH. Correspondingly, the higher the dosage of MEA added for treating a liquid in the treatment process of the present invention the greater the amount of the hydroxide(s) in the recently proposed treatment solution, which is also added to the treated liquid as part of the treatment process, will react with the MEA rather than with H₂S and other sulfur containing contaminants in the treated liquid. This would be counterproductive and undesirable. Hence, only a small amount of MEA within the discussed range will typically be added in the treatment solutions according to the second aspect of the present invention, i.e., an amount sufficient to function as an anti-scaling agent, but not so large as to significantly reduce the effectiveness of the hydroxide(s) in remediating the H₂S and other sulfur containing contaminants. As with the organic acid(s), the MEA may be added to the recently proposed treatment solution so as to form a modified treatment solution which is then added to the liquid being treated, or the MEA may be added to the liquid being treated separately from the recently proposed treatment solution and from the organic acid(s). Again, however, even if MEA is added to the recently proposed treatment solution and stored for a month or so, testing shows that this does not change the content of the components of the modified treatment solution to any appreciable extent.

### DETAILED DESCRIPTION OF PRESENT EXEMPLARY EMBODIMENTS

### Treatment Solutions and Treatment Methods - Exemplary Embodiments

According to exemplary embodiments of the present invention, there is provided treatment solutions and treatment processes which use the treatment solutions for treating hydrocarbon or petroleum based liquids such as crude oil, diesel fuel, etc., as further defined in the accompanying claims as well as for treating contaminated aqueous solutions such as water extracted from the ground with crude oil and natural gas, to remediate hydrogen sulfide (H₂S), other sulfur-containing compounds, and other contaminants in such liquids down to acceptable levels, while at the same time assuring that that substantially no precipitates, scale or the like will be generated from the treated liquids for a period of time such as hours, days, or months.

Remediating H₂S is a primary focus and advantage of the treatment solutions and processes according to the exemplary embodiments of the present invention because H₂S is very toxic and corrosive, is typically present at elevated levels in crude oil and natural gas as extracted from the ground, as well as in aqueous solutions extracted from the ground with crude oil or natural gas, and the acceptable content of H₂S in hydrocarbon based liquids and aqueous solutions is highly limited and regulated. The inventors' recently proposed treatment solution and treatment process are very effective and efficient at remediating H₂S in hydrocarbon based liquids and contaminated aqueous solutions as disclosed in WO 2019/036731 A2. In addition to remediating H₂S, however, in some situations it is also very important that substances generated in the remediation of H₂S and other sulfur-containing compounds, as well as other contaminants present in the treated liquids, not be released from the treated liquids as precipitate(s), scaling or the like while the liquids are being treated, transported or stored for periods of time, and this is another important focus of the present invention. One particular application in which it is very important to assure that no precipitates, scale and the like will be generated from a treated hydrocarbon based liquid is when crude oil directly from the ground is being transported via tanker truck or other vessel to a major pipeline, which then transports the crude oil to a refinery. In relation to treated aqueous solutions, such solutions are sometimes used in industrial applications, including for boilers, chillers, hide tanning processes, processes involving wood pulp and paper, etc. wherein it is important that precipitates, scaling and the like not be released or generated from the treated aqueous solutions.

A treatment solution and treatment process according to exemplary embodiments of the present invention are modifications of the treatment solutions and treatment processes recently proposed by the present inventors as disclosed in WO 2019/036731 A2, and generally involve use of the recently proposed treatment solution for efficiently remediating H₂S and other contaminants in hydrocarbon based liquids and aqueous solutions as further defined in the accompanying claims, together with one or more additional substances which function to prevent the remediated contaminants and other contaminants in the treated liquids from being released as precipitate(s), scaling, or the like. In the treatment processes according to the present invention, an appropriate amount of the recently proposed treatment solution is used and functions to remediate the H₂S and other contaminants in the treated liquids down to acceptable levels in essentially the same manner as explained in WO 2019/036731 A2, while the additional substance(s) are added in appropriate amount(s) and function to assure that substantially none of the remediated contaminants and other contaminants in the treated liquids will be released from the treated liquids as precipitate(s), scaling or the like while the liquids are being treated, transported or stored for periods of time. According to the invention, such additional substances include at least organic acid, selected from a group consisting of fulvic acid and humic acid. When such organic acid(s) are also added to the treated liquids, even at relatively low concentrations, e.g., 3 ppm or less, they are very effective at preventing formation of precipitates, scale and the like from the treated liquids. Another substance which may also be used in an embodiment of a treatment process according to the present invention is monoethanolamine (MEA). When also added to the treated liquids at relatively low concentrations, e.g., 15 ppm or less, MEA functions effectively as an anti-scaling agent, and also provides other beneficial functions, including remediation of some other contaminants, as discussed herein.

For a clear understanding of the present invention, below there is first presented (I) a discussion of the inventors' recently proposed treatment solution and treatment process such as disclosed in WO 2019/036731 A2 for remediating H₂S and other contaminants, followed by (II) a discussion of embodiments of a treatment solution and treatment process according to the present invention, in which the additional substance(s) are used together with the inventors' recently proposed treatment solution and treatment process for treating various contaminated liquids to remediate H₂S and other contaminants in the liquids, while preventing formation of precipitate(s), scaling and the like.
(I) The Treatment Solution and Treatment Process According to the Inventors' Recent Proposal

Primary aspects of the treatment solution and treatment process according to the inventors' recent proposal as disclosed in WO 2019/036731 A2 are explained above, including that the treatment solution is aqueous based and may primarily include one or more hydroxides at a collective, high concentration of 35-55 weight percent, and preferably at least 45 weight percent, that the treatment process is very efficient and effective for remediating H₂S and other contaminants in hydrocarbon based liquids and aqueous solutions the treatment process includes steps of adding a standard dosage of such treatment solution within a range of 0.25 - 6.0 ml / liter of the liquid being treated, preferably within a range of 1.0 - 5.0 ml / liter of the liquid being treated, which corresponds to approximately 125-3000 ppm of hydroxide(s) in the liquid being treated, and permitting the treatment solution to react with the liquid being treated for a time period of 15 minutes - 24 hours, application of excessively high dosages of the treatment solution to treated liquids may be desirable in some situations, but tend to cause precipitate(s) and the like to be released from the treated liquid, which would be undesirable for the present invention, etc. Some further details of the recently proposed treatment solution and treatment process are presented below.

Again, the most appropriate or optimum dosage amount of the recently proposed treatment solution within the discussed range will vary, generally with linear scalability, based on a few factors. Two important factors are the particular contaminants and the levels of the contaminants in the liquids. While H₂S is the main contaminant which must typically be remediated in the liquids being treated, such as crude oil, it may be necessary or desirable to also remediate the other contaminants besides H₂S in the liquids, and the other contaminants may also create complications for remediating the H₂S. Generally, if the liquid being treated is a medium to light crude oil and the amount of H₂S is relatively low, e.g. 20 ppm - 100 ppm the most appropriate dosage rate may be toward the lower end of the standard range, whereas if the amount of H₂S is relatively high, e.g. 20,000 ppm -40,000 ppm the most appropriate dosage rate may be toward the higher end of the standard range, and most appropriate dosage rates for intermediate amounts of H₂S would be at correspondingly intermediate values of the standard range.

Another important factor, particularly in relation to some hydrocarbon based liquids, is the viscosity thereof. The treatment solution has good migration characteristics when added to contaminated aqueous solutions or thin, low viscosity hydrocarbon based liquids, e.g., liquids with an API gravity of 33° or more, and can readily disperse throughout the liquids after being added thereto, although the liquids could be heated and/or mixed to increase the rate and/or uniformity of dispersion, which will reduce required reaction time for remediating H₂S. For medium viscosity hydrocarbon based liquids with an API gravity of about 23°-33°, mixing by stirring at low - moderate speeds, e.g., 100-500 rpm or other appropriate manner, and/ or heating to temperatures below the flash point of the liquids is helpful to disperse the treatment solution in the liquids. For highly viscous hydrocarbon based liquids with an API viscosity of 15° or less, heating to temperatures below the flash point of the liquids together with mixing is generally required to properly disperse the treatment solution in the liquids. Different types of hydrocarbon liquids include light crude oil (API gravity ≥ 31.1°), medium crude oil (API gravity between 23.3° and 3 1.1°), heavy crude oil (API gravity < 23.3°), bunker fuel (API gravity approximately 6°), diesel fuel (API gravity approximately 34°), etc. Hydrocarbon based liquids with an API gravity of less than 10° are heavier than water, are extremely viscous and will sink in water. In terms of the dosage rates for the treatment solution, if the hydrocarbon based liquid contains 2,000 ppm or less of H₂S, for low viscosity (API gravity of 33° or more) hydrocarbon based liquids such as diesel fuel, a most appropriate dosage amount may be 1-2 ml / liter of based liquid, while for medium viscous liquids (API gravity of 20°-30°) such as light, medium or heavy crude oil, a most appropriate dosage amount may be 2-3.5 ml / liter of the hydrocarbon based liquid, and for highly viscous petroleum based liquids (API gravity of 15° or less), such as bunker fuel, a most appropriate dosage amount may be 5-6 ml / liter of the hydrocarbon based liquid.

As far as reaction time permitted, there may no restriction thereon and the treatment solution may be permitted to react for any suitable time such as 15 minutes - 24 hours at a most appropriate dosage rate based on the concentration - amount of H₂S contained in the particular liquid and the viscosity (API gravity) of the liquid in a treatment process according to the inventors' recent proposal. However, there may be situations where reaction time is limited, e.g., limited to an amount of time required to transport the hydrocarbon based liquid to a desired destination for unloading after the treatment solution has been added to the liquid, limited based on desired productivity for the treatment process, etc. In such situations the dosage amount of the treatment solution to be added to the liquid in the treatment process may be increased above the standard dosage amount, e.g., increased to an amount that will assure essentially complete remediation of the H₂S contained in the particular liquid within the reaction time permitted. For example, if a normal reaction time required to fully remediate H₂S contained in the particular liquid is 2 hours, but the permitted reaction time is only 1 hour, a most appropriate dosage amount may be twice that of a standard dosage amount determined based on the concentration - amount of H₂S contained in the particular liquid and the viscosity of the liquid. Again, mixing and/or heating of the treated liquid will also typically reduce required reaction time.

According to one study performed by the present inventors, when a crude oil containing about 1000 ppm H₂S was treated with a treatment solution according to the inventors' recent proposal which contained NaOH as approximately 99% of the total hydroxides therein, KOH as the other 1% of hydroxides therein and total hydroxide concentration of approximately 50 wt% in the solution, when 0.25 ml of the treatment solution was added / liter of the crude oil it took approximately 12 hours to remediate or abate the H₂S down to approximately 0 ppm, whereas when 5 ml of the treatment solution was added / liter of the crude oil it took approximately 30 minutes to remediate the H₂S down to approximately 0 ppm. In another study involving the same crude oil, essentially the same results were obtained when the treatment solution contained KOH as approximately 99% of the total hydroxides therein, NaOH as the other 1% of hydroxides therein and total hydroxide concentration of approximately 50 wt% in the solution was used in the same dosage rates for treating the crude oil.

A complicating factor in treating naturally occurring hydrocarbon based liquids such as crude oil, as well as aqueous solutions extracted from the earth along with crude oil or natural gas, is the fact that such liquids typically have widely varying characteristics that must be considered. For example, even in relation to one given oil well or natural gas well, the crude oil and aqueous solutions extracted therefrom have characteristics which can vary greatly, e.g., crude oil extracted from a given well at a given time on a given day, can contain amounts of H₂S, as well as various types and amounts of other contaminants, which are significantly different from those contained in crude oil extracted from the same well on the same day, but at a different time.

According to an advantageous aspect of the recently proposed treatment solution and treatment process, a given or standard blend of the treatment solution may be used for treating a wide variety of different liquids, whether hydrocarbon or water based, and for treating such liquids which have widely varying characteristics. For example, addition of a dosage amount of the treatment solution within the upper half of the standard dosage range, or even addition of a moderately excessive dosage amount above the standard dosage range, will generally assure that the H₂S and other contaminants will be remediated down to acceptable levels, but will not detrimentally affect the treated liquid to any significant extent. Thus, it may be advantageous and/or convenient to add such dosage amounts of a standard blend the treatment solution to a given liquid to ensure that the H₂S and other contaminants in the liquid will be sufficiently remediated down to acceptable levels, rather than carefully analyzing the given liquid and determining a most appropriate dosage of the treatment solution based on the analysis. While the cost of the treatment may be increased because additional treatment solution is being used, the additional cost may be acceptable in some situations. On the other hand, an object of the present invention is to avoid formation and release of precipitates from treated liquids, whereby highly excessive dosage amounts should generally be avoided, and it may be desirable to also increase dosage amounts of organic acid(s) and/or MEA when increasing the dosage amount of the hydroxide(s) when treating a liquid.

Although there are many different common compounds of hydroxide (OH⁻) that may be used in the treatment solution according to the recent proposal, many of these have undesirable characteristics associated therewith, including that they would introduce other contaminants into the treated liquids which may require further remediation step(s), high cost, etc. For example, iron, other metals, calcium, barium, and chlorides interfere with heat and cracking in refining processes and would have to be removed from treated crude oil before it is refined. On the other hand sodium, potassium, magnesium, and manganese, are permitted in refining processes as long as the content is not too high, so that hydroxides of these elements would be appropriate if the treatment solution is being used for treating crude oil. For example, a study performed showed that for crude oil with a starting concentration of about 8 ppm Na and about 1000 ppm H₂S, after treatment using 3 ml of the treatment solution according to the inventors' recent proposal / liter of the crude oil, the final concentrations were about 40 ppm Na and 0 ppm H₂S. Sodium has no adverse effects in the crude oil refining process as long as the concentration of sodium is generally ≤ 250 ppm. Potassium hydroxide (KOH), magnesium hydroxide (Mg(OH)₂), and manganese hydroxide (Mn(OH)₂, Mn(OH)₄) are some other suitable hydroxides for use in the recently proposed treatment solution when treating crude oil. For treating contaminated aqueous solutions there are less restrictions on they hydroxides which may be included in the recently proposed treatment solution, although cost is typically an important consideration and sodium hydroxide and potassium hydroxide are relatively low in cost.

Use of a combination of hydroxides is advantageous for more completely reacting with and remediating most or all of the sulfides in the hydrocarbon based liquids and contaminated aqueous solutions, noting that there are more than 300 types of sulfides and NaOH is not the most suitable hydroxide for treating each of the different sulfides. Of course, hydrogen sulfide H₂S is by far the main contaminant that must be remediated. Potassium hydroxide (KOH), for example, is more effective than sodium hydroxide for reacting with some species of sulfides. Hence, if the treatment solution according to the inventors' recent proposal contains some amount of potassium hydroxide (KOH) together with the sodium hydroxide, the treatment solution achieves a more complete reaction with all of the sulfur contained in the petroleum based liquids in comparison to just using a treatment solution of sodium hydroxide. For example, the treatment solution according to the recent proposal may contain a blend of 50 - 99.9 parts NaOH : 0.1 - 50 parts KOH, at a total hydroxide concentration of 35-55 weight percent in the treatment solution, and preferably at least 45 weight percent in the treatment solution.

Also, aqueous solutions of different hydroxides will freeze at different temperatures, even if the solutions have the same collective concentrations of the different hydroxides, and this may be an important consideration. For example, if the treatment process is to be conducted at an ambient temperatures near, at or below 0°C, it may be desirable to use a treatment solution containing a collective high concentration of 35-55 weight percent, and preferably at least 45 weight percent, of one or more hydroxide(s) wherein the treatment solution has a freezing temperature below the ambient temperature so as to avoid any temperature-related complications such as freezing or gelling of the treatment solution and/or the treated liquid, e.g., a treatment solution containing KOH as the primary hydroxide has a freezing temperature lower than that of a treatment solution containing NaOH as the primary hydroxide by at least 10°C.

The recently proposed treatment solution may include other components, again, depending on the presence of other contaminants in the treated liquids which are to be remediated, as well as on the desired results of the treatment process. These other components may also be included in the treatment solution and treatment process according to the present invention. For example, a small amount of a silicate such as potassium silicate may be added to such treatment solution to provide an anti bacterial function, which may be desirable for killing microbes, including sulfur eating microbes. For example, 2-10 ml of a potassium silicate aqueous solution containing 29-45 weight percent potassium silicate in water may also be added per liter of the recently proposed treatment solution containing a high concentration of hydroxide(s), and then the treatment solution containing hydroxide(s) and potassium silicate may be added to the liquid being treated at appropriate dosage rates within the discussed standard dosage range. Alternatively, appropriate dosage amounts of the potassium silicate solution and the treatment solution may be added to the liquid being treated. Potassium silicate comes in various ratios of SiOz : K₂O, but is often represented as K₂SiO₃.

Other appropriate anti-bacterial agent or agents could be used in addition to or as an alternative to silicates, depending on the particular liquid being treated. For example, barium (Ba) may be added in an amount of ≤ 100 ppm of the liquid being treated, whether a hydrocarbon based liquid or aqueous solution, and will provide an antibacterial function. Barium tends to be more appropriate for use with lighter hydrocarbon based liquids including diesel fuel and for treating contaminated aqueous solutions, while potassium silicate tends to be more appropriate for use with heavier hydrocarbon based liquids including crude oil. Also, barium is prohibited in hydrocarbon based liquids which are to be refined because barium has an adverse effect on the refining process. Therefore, barium is not preferred in the practice of the present invention when hydrocarbon based liquids such as crude oil are being treated.

Another component which may be included in or used with the inventors' recently proposed treatment solution is sodium bisulfite (NaHSO₃). When added at a relatively low concentration, e.g., 0.001 - 0.05 ppm / liter of liquid being treated, sodium bisulfite is very effective for displacing dissolved gases such as methane (CH₄) contained in contaminated aqueous solutions as these liquids are treated and transported via a tanker truck, pipeline or other manner, so that the displaced gas may be captured, collected and sold. This is, of course, very desirable and advantageous. Thus, for example, if contaminated wastewater produced or obtained when extracting methane - natural gas from a well contains 5% volume of methane - natural gas dissolved therein, this can represent a significant amount of methane - natural gas that may be recovered, and favorably increases the total production of the well. An aqueous solution of sodium bisulfite may be highly concentrated, e.g., 70-90% wt/wt, may be added to the recently proposed treatment solution at an appropriate rate to achieve a concentration of 0.001 - 0.05 ppm / liter of liquid being treated. While addition of sodium bisulfite may be particularly suitable for treating aqueous solutions, it may also be added to a treatment solution used for treating hydrocarbon based liquids. Significantly, however, if sodium bisulfite is to be used in treating crude oil or other hydrocarbon based liquids it should be added in hydrated form, whether in power or liquid, to function efficiently.

Additionally, hydrocarbon based liquids such as crude oil and contaminated aqueous solutions tend to have various impurities and various amounts of impurities, many of which must or should be remediated along with the H₂S and other sulfur containing contaminants. These impurities include ammonia (NH₃), carbon dioxide gas (COz), as well as various solid impurities including dead - decomposing organic matter, total suspended solids (TSS) or "rag" which typically include various minerals and other inorganic matters which bond to the hydrocarbons, bottom sediment and water (BSW), heavy metals, etc. The accumulated ammonia may be discharged as a gas from the liquid being treated, which is toxic and undesirable. For remediating ammonia the pH of the treated liquids may be adjusted to a level such as 8.5 - 7.0, at which the ammonia is converted to ammonium ion (NH₄+) and thereby prevents the ammonia from being released in gas form. Such pH level is consistent with the treatment process according to the recent proposal, e.g., at the standard dosage rates of the treatment solution the pH of treated crude oil is increased to about 7.0. However, reducing the pH of the treatment solution may also affect the reactions between hydroxide and H₂S. At pH below 7.0, S²⁻ ions in the liquid are converted to HS⁻ ions, which is one step closer to H₂S, so that there may be more residual H₂S in the liquid when the pH is adjusted lower and less residual H₂S in the liquid when the pH is adjusted higher. Of course, remediation of H₂S is a primary focus of the invention, and would normally be a primary factor in determining the appropriate pH for the treated liquid. It should also be noted that significantly overdosing with the recently proposed treatment solution may increase the pH above 9, and thus increases the risk of producing more ammonia gas as well as causing precipitate(s) to be formed and released. Hence, this is another reason why the dosage rate for the recently proposed treatment solution should be maintained within a standard range in relation to the present invention. An alternative approach for remediating ammonia in the liquids being treated is to remove the ammonia from the aqueous portion of the liquid via an ion exchange process.

If crude oil is the liquid being treated and contains an appreciable amount of carbon dioxide (COz), this may affect the treatment process because hydroxide(s) contained in the recently proposed treatment solution may react with carbon dioxide in the presence of trace amounts of water according to the following equation (3), whereby it may be necessary to use an additional amount of hydroxide(s) for treating the crude oil, e.g., by increasing the dosage amount of the recently proposed treatment solution added to the crude oil.

CO₂ + NaOH (aqueous) → NaHCO₃ (3)

In regards to the rag impurities in the liquids being treated, these may be conveniently and efficiently removed from the liquids using the same treatment solution and treatment processes according to the inventors' recent proposal as used for reacting with the H₂S and other sulfur-containing compounds in the liquids. As discussed in WO 2019/036731 A2, however, this may involve a higher dosage rate of the recently proposed treatment solution as compared to the standard dosage rate for remediating H₂S and other sulfide compounds and/or adding other substances which will cause formation of precipitates or the like, e.g., components such as ferric chloride (FeCl₃) and/or ionic polymers. For example, adding 2-5 times the standard dosing rate of the recently proposed treatment solution to the hydrocarbon based liquid will generally cause remediated sulfur containing compounds, rag impurities, and other remaining impurities remaining in the treated hydrocarbon based liquid to precipitate out of the liquid if so desired, while addition of ferric chloride (FeCl₃) and/or ionic polymers to the treated liquid may cause flocculation which traps - bonds the contaminants and causes them to precipitate out of the treated liquids. Of course, formation of precipitates would be contrary to one of the objects of the present invention, which functions to maintain the remediated sulfur containing compounds and other contaminants in the treated liquid for some period of time without formation of precipitates, scaling or the like.

Similarly, an exemplary treatment process according to the inventors' recent proposal may include additional steps of collecting, discharging and treating any precipitates and/or gases generated by the reactions between the treatment solution and the hydrocarbon based liquids. Again, however, an important aspect of a treatment process using a modified treatment solution according to the present invention is that substantially no precipitates, scaling or the like will be generated by the remediated liquids while the liquids are being treated, transported and stored for a predetermined period of time such as 30 minutes - one or more days. Hence, a treatment process according to the present invention should normally not require any steps of collecting, discharging and treating any precipitates released from the treated liquids because there should be no such precipitate(s), scaling or the like generated.

### (II) The Treatment Solution and Treatment Process According to the Present Invention

Again, the treatment process according to the present invention will include use of a dosage of the treatment solution according to the recent proposal within the discussed standard range for efficiently remediating H₂S and other contaminants in the liquids as further defined in the accompanying claims down to safe, acceptable levels in essentially the same manner as discussed in WO 2019/036731 A2, but further involves use of additional substance(s) to assure that no precipitate(s), scaling and the like are generated and released from the treated liquids as further defined in the accompanying claims while the liquids are being treated, transported and stored for time periods of hours, days and weeks, and without causing any significant problems for the treated liquid. The treatment process involving addition of the recently proposed treatment solution within the standard dosage range to a contaminated liquid may typically generate little or no precipitate(s), scaling and the like, but to assure such result the treatment process according to the present invention include use of one or more additional substances along with a dose of the recently proposed treatment solution within the standard dosage range.

The additional substance(s) to be used together with the recently proposed treatment solution according to the exemplary embodiment of the present invention include at least one organic acid selected from a group consisting of fulvic acid and humic acid. In the treatment process according to the present invention, the organic acid(s) may be added to the liquid being treated in an appropriate collective amount that will result in a normal concentration of 0.01 - 10 ppm, and preferably 0.1- 3.0 ppm, in the liquid, whether the treated liquid is a hydrocarbon based liquid or contaminated aqueous solution as further defined in the accompanying claims. Within such range, the most appropriate dosage rate of the organic acid(s), like the most appropriate dosage rate of the recently proposed treatment solution, largely depends on the same three factors discussed in relation to determination of the most appropriate dosage amount of inventors' recently proposed treatment solution, i.e., 1) the amount of H₂S and other sulfur containing contaminants in the liquid being treated; 2) the viscosity of the liquid; and 3) the amount of time permitted for reacting the treatment solution with the liquid being treated, although heating and/or mixing of the liquid being treated will reduce the viscosity of the liquid and will also reduce the amount of time required for properly remediating the H₂S and other contaminants in the liquid. The dosage amount of organic acid(s) is substantially, linearly scalable within the discussed range based on these factors.

The organic acid(s) used according to the present invention react and/or bond with the sulfur containing compounds, including those exposed and remediated by reacting with NaOH or other hydroxide(s) in the recently proposed treatment solution, and are essentially all maintained in the treated liquid, rather than being discharged therefrom as gasses, precipitate(s), scale or the like. It is possible that a small amount of the remediated sulfide compounds may be released from the treated liquids as a gas such as sulfur dioxide or as a precipitate such as a sulfate when the organic acid(s) are added at the discussed normal concentrations, but the small amount is generally not significant. Further, if it is desired that no amount of precipitate(s), gas(ses), scale and the like be generated from the treated liquid, the amount of organic acid(s) added in the treatment process may be increased above the discussed concentration, e.g., increased by 10-50%. Very importantly, the treated liquids are not detrimentally affected by the treatment process to any significant extent, e.g., the remediated sulfide compounds mostly remain in the treated liquids, but in the form of other sulfur compounds which are not toxic or highly dangerous, unlike the H₂S before the remediation.

Fulvic acid is actually a family of organic acids, but may typically be identified as 1H,3H-Pyrano[4,3-b][1]benzopyran-9-carboxylic acid, 4,10-dihydro-3,7,8-trihydroxy-3-methyl-10-oxo-; 3,7,8-trihydroxy-3-methyl-10-oxo-1,4-dihydropyrano[4,3-b]chromene-9-carboxylic acid, with an average chemical formula of C₁₃₅H₁₈₂O₉₅N₅S₂ and molecular weights typically in a range of 100 to 10,000 g/mol. Somewhat similarly, humic acid is a mixture of several molecules, some of which are based on a motif of aromatic nuclei with phenolic and carboxylic substituents, linked together, and the illustration below shows a typical structure. Molecular weight (size) of humic acid is typically much larger than that of fulvic acid, and can vary from 50,000 to more than 500,000 g/mol.

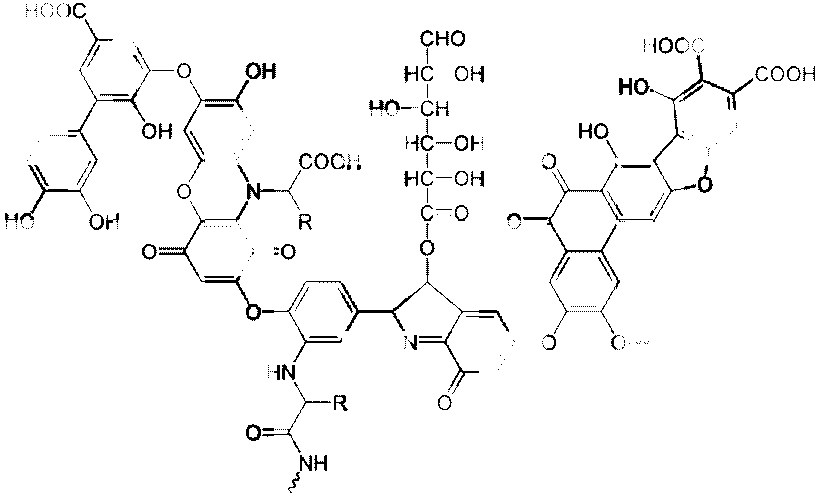

The organic acid(s) can be added to the treatment solution according to the present invention in powder form, e.g., a powder containing 70 - 100 wt% of the organic acid(s), or in an aqueous solution, e.g., an aqueous solution containing 1-40 % volume of the organic acid(s).

Another substance which may be used in the treatment processes according to the present invention is monoethanolamine or MEA (C₂H₇NO). MEA is a liquid organic compound and a weak base. MEA functions as a descaler and is also more effective at remediating some species of sulfur compounds than are the hydroxide(s) in the recently proposed treatment solution so that the treatment process according to an exemplary embodiment of the present invention achieves a more complete remediation of various species of sulfur containing compounds. An appropriate amount of the MEA to be used in the treatment process will typically correspond to a concentration of 0.5 - 15 ppm, and preferably 1.0 - 10 ppm, of the MEA in the hydrocarbon based liquid or aqueous solution as further defined in the accompanying claims being treated. Within such range, the most appropriate dosage rate of MEA, again, largely depends on the same factors as discussed in relation to the organic acid(s) and the recently proposed treatment solution, and the dosage amount of MEA is substantially, linearly scalable within the discussed range based on these factors. MEA may be used in the treatment process according to the present invention directly at 100% concentration.

In the treatment process of the present invention, there are some additional considerations relating to MEA. For one, MEA exothermically reacts with hydroxides such as NaOH also used in the treatment process, so that it is desirable not to include an excessive amount of MEA in the treatment process as doing so may become counter productive to the intended function of the hydroxides for reacting with H₂S to remediate same. MEA also can react with carbon dioxide (CO₂) according to the following reversible reaction

CO₂ + 2 HOCH₂CH₂NH₂ → HOCH₂CH₂NH₃⁺ + HOCH₂CH₂NHCO₂⁻ ... (4)

To any extent that MEA reacts with carbon dioxide in a treated liquid, this may reduce the amount of undesired reactions involving the hydroxide(s) also being used in the treatment process, i.e., reactions between the MEA and the hydroxide(s) and reactions between carbon dioxide and the hydroxide(s) according to equation (3) above. The amount of carbon dioxide in the liquid being treated may also be an important factor if the amount is significant, and it may be desirable to increase the dosage amount of MEA based on the content of carbon dioxide in the treated liquid in for liquids containing a relatively high amount of carbon dioxide.

Another optional component which may be included in the treatment solution and treatment process of the present invention is a an anti-freezing or anti-gelling agent, which may be desirable when treating (hydrocarbon based liquids such as) crude oil, particularly at cold temperatures 0°C and below, because other component(s) used in the treatment solution and treatment process according to embodiments of the present invention may cause freezing or gelling in the treated hydrocarbon based liquids as further defined in the accompanying claims at such temperatures. For example, the water in the treatment solution according to the inventors' recent proposal in WO 2019/036731 A2, the water which is generated by the reactions between the hydroxide(s) and H₂S and other contaminants in the treated liquids, and the organic acids may cause gelling in treated crude oil. Although the treated crude oil could be heated to prevent such gelling, it is not always possible or practical to heat the treated crude oil. In such situations addition of an anti-gelling agent may be the most appropriate manner of preventing gelling of the crude oil. One appropriate group of anti-gelling agents is low molecular weight hydrocarbon liquids including hexane and cyclo hexane, which may be added to the hydrocarbon based liquids being treated as further defined in the accompanying claims at a dosage rate of 10 % volume - 25% volume of the collective total volume of all other components being added to the hydrocarbon based liquids as further defined in the accompanying claims being treated according to the treatment process of the present invention. Thus, for example, in a treatment process according to the present invention, if a large volume of crude oil is being treated using 85 gallons (i.e. 321.8 liters) of the treatment solution according to the inventors' recent proposal in WO 2019/036731 A2, together with 10 gallons (i.e. 37.9 liters) of organic acid(s) and 5 gallons (i.e. 18.9 liters) of MEA, for a total volume of the other components equal to 100 gallons (i.e. about 380 liters), 10 - 25 gallons (i.e., 38 - 95 liters) of hexane or cyclo hexane may also be added to the crude oil as an anti-gelling agent as part of the treatment process.

An alternative for preventing freezing or gelling of hydrocarbon based liquids as further defined in the accompanying claims in the treatment process of the present invention, and as discussed above, is to select the hydroxide(s) used in the treatment solution according to the inventors' recent proposal such that that treatment solution will have a freezing temperature below the ambient temperature at which the treatment process is being conducted. For example, in a treatment process treating crude oil if the recently proposed treatment solution contains approximately equal amounts of NaOH and KOH, at a collective concentration of approximately 50 wt % of the treatment solution, components of such treated crude oil will begin gelling at approximately 0°C - ⁻5°C, whereas if the same crude oil is treated using a treatment solution containing NaOH and KOH in a ratio of 19:1 at a collective concentration of approximately 50 wt % of the treatment solution components of such treated crude oil will begin gelling at approximately 5°C.

In the treatment process according to the exemplary embodiments of the present invention, appropriate amounts of the inventors' recently proposed treatment solution for treating contaminated liquids and the additional component(s) that prevent formation of precipitate(s), scaling, and the like, and any anti-freezing or anti-gelling agent may be separately added to the liquids being treated or, in the alternative, one or more of the additional components may be added to the recently proposed treatment solution to form a modified treatment solution, which is then added in an appropriate dosage to the liquids being treated. The alternative approach is more convenient as a practical matter because the modified treatment solution may be prepared in advance at any convenient location, transported in a single container to another location where it is added to the liquid being treated, and permits all components to be added simultaneously to the liquid being treated. Although some of the various components may react with each other in such a modified treatment solution prior to being added to the liquid being treated, the amount of such reactions is small and this does not significantly reduce the effectiveness of treatment process in comparison to a treatment process in which each of the several components is added separately to the liquid being treated. Thus, for example, appropriate amounts of the organic acid(s), the MEA and/or the anti-gelling agent may be added to a given volume of the inventors' recently proposed treatment solution so as to form a modified treatment solution so that when a quantity of the modified treament solution is then added to a given volume of the liquid being treated, each of the components will be at the appropriate dosage rate for the given volume of the treated liquid.

An exemplary modified treatment solution according to the present invention may be formed by combining 1-15 ml of an aqueous solution containing 5 % volume of the organic acid(s) in water and 0.05 - 0.5 ml of MEA per liter of the recently proposed treatment solution containing a total hydroxide concentration of 35-55 weight percent, and preferably at least 45 weight percent, in water. The modified treatment solution may then be added to the liquids being treated at appropriate dosage rates, which may substantially correspond to the standard dosing range as discussed in relation to the inventors' recently proposed treatment process, i.e., a range of 0.25 - 6.0 ml / liter of the liquid being treated, preferably within a range of 1.0 - 5.0 ml / liter of the liquid being treated, noting that the amounts of organic acid(s) and MEA being combined with the recently proposed treatment solution in forming a modified treatment solution amount to approximately 1% of the modified treatment solution. The comparatively small amount of the organic acid(s) included in the modified treatment solution does not substantially change basic characteristics imparted by the much larger quantity of hydroxide(s), and the modified treatment solution will have a pH substantially corresponding to that of the treatment solution not including the organic acid(s), e.g., 13-14, and the modified treatment solution will increase the pH of the liquids being treated to essentially the same extent as the recently proposed treatment solution not including the organic acid(s).

Again, the main important advantages achieved with the treatment process according to the present invention are the efficient remediation of H₂S and other contaminants in the liquids being treated down to safe, acceptable levels while preventing precipitate(s), scaling and the like from being generated and released from the treated liquids while the liquids are being treated, transported and stored for time periods of hours, days and weeks, and without detrimentally affecting the treated liquids. For avoiding formation of precipitate(s), scaling and the like, the amount of the inventors' recently proposed treatment solution used in the treatment process should be kept within the standard range discussed herein because addition of an excessive amount of the recently proposed treatment solution tends to promote formation of precipitate(s), scaling and the like. When the treatment process of the present invention involves use of a modified treatment solution such as discussed above, even if the amount of the modified treatment solution added / liter of a treated liquid is increased beyond the standard dosing range, the amounts of organic acid(s) and MEA are proportionally increased together with the amount of hydroxide(s) in the modified treatment solution and will normally still function to assure that substantially no precipitate(s), scaling or the like will be formed from the treated liquids while they are are being treated, transportedand/or stored for a period of time, even though the increased dosage of the hydroxide(s) added in the treatmetn process may otherwise normally tend to generate some precipitate(s), scaling or the like in the treated liquids if the orgainic acid(s) and MEA were not also present.

Of course, it is also possible to separately increase the amount of organic acid(s) and/or MEA added in the modified treatment solution according to the present invention, without increasing the amount of hydroxide(s) and other components. For example, if a treated liquid such as crude oil, has a particularly high H₂S concentration or the treated oil is to be transported or stored for an extended period of time, e.g., 1-3 months, additional amount(s) of the organic acid(s) and/or the MEA above the normal dosage ranges discussed above may be added to the treated liquid to better assure that no precipitate(s), scaling or the like will be released from the treated liquid during the extended period of time. This would typically not create any problems for the treated liquid, although it would increase the cost of the treatment process somewhat.

### Examples Of Treatment Processes According to the Present Invention

Following are some examples of treatment processes using a treatment solution according to the present invention. A first group often (10) examples is presented in Table 1 below, in which different amounts of a modified treatment solution according to the present invention were added to 100 ml of a crude oil having an API gravity of 34 and containing 40,000 ppm of H₂S, while the crude oil was being mixed at 300 rpm at a temperature of 21°C. The modified treatment solution used in these examples combined a primary -large amount of the inventors' recently proposed treatment solution and smaller amounts of fulvic acid and MEA, such that the modified solution contained, per liter: approximately 50 wt % collectively of NaOH and KOH, with NaOH accounting for approximately 49.5 wt% and KOH accounting for approximately 0.5 wt%; 0.1 wt% Potassium silicate K₂SiO₃ ; 1.0 wt% fulvic acid having a molecular formula of C₁₄H₁₂O₈ and molecular weight of 308.2 g/mol; and 0.3 wt% MEA. The mixing had negligible effect on the volume of precipitate(s) produced. The several components of the treatment solution were combined prior to being added to the crude oil in each of the Examples.

**Table 1**

| Example No. | Dosage Amount | Reaction Time | Residual Amount H₂S | Amount of Precipitate* |
|---|---|---|---|---|
| 1 | 0.1 ml | 45 minutes | | 0.0 ml |
| 2 | 0.3 ml | 45 minutes | | 0.0 ml |
| 3 | 0.5 ml | 45 minutes | | 0.0 ml |
| 4 | 0.8 ml | 45 minutes | | 5.0 ml |
| 5 | 1.0 ml | 45 minutes | | 7.5 ml |
| 6 | 0.1 ml | 30 minutes | 30 ppm | |
| 7 | 0.3 ml | 30 minutes | 12 ppm | |
| 8 | 0.5 ml | 30 minutes | 5 ppm | |
| 9 | 0.8 ml | 30 minutes | 3 ppm | |
| 10 | 1.0 ml | 30 minutes | 0 ppm | |

| | | | | |
|---|---|---|---|---|
| * Precipitate is solid yellow liquid which tested positive for elemental sulfur, no solid matter. | | | | |

As shown in Table 1, even though the amount of H₂S in the crude oil was fairly high at 40,000 ppm, the effectiveness in remediating the H₂S was generally effective. At a dosage of 0.1 ml of the treatment solution H₂S content was greatly reduced down to 30 ppm, and H₂S content was progressively further reduced to 5ppm with a dosage of 0.5 ml, and to 0 ppm H₂S when 1.0 ml dosage of the treatment solution was added. On the other hand, no precipitate(s) were formed until the dosage rate was increased to 0.8 ml, which corresponds to 8 ml / liter of the crude oil, and is above the 6 ml upper limit of the standard dosage rate for the inventors' recently proposed treatment solution. Further the reaction times were fairly short, even though the treated liquid was being mixed which would normally reduce the time required for completely reacting the treatment solution with the H₂S in the crude oil. If there is no restriction on the amount of time permitted for reacting the treatment solution according to the present invention with the H₂S in the crude oil, a lesser amount of the treatment solution will be sufficient for reducing the H₂S content down to 5 ppm or less, e.g., a 2.5 ml dosage may have been sufficient to reduce the H₂S content down to 0 ppm had more time been permitted.

### Example 11

In this comparative example, the liquid being treated was a light, hydrotreated, petroleum distillate with an API gravity of 53° containing 40,000 ppm H₂S vapor (as determined by ASTM D5705), 41 ppm mercaptan sulfurs (as determined by UOP163) and 33 ppm of H₂S in liquid (as determined by UOP163), while the same formulation of the modified treatment solution was used as in Examples 1-10, and was added at a dosage rate of 10ml / liter of the liquid being treated (1% based on volume). All testing for this comparative Example was performed by a major, accredited testing lab. The several components of the treatment solution were combined prior to being added to the petroleum distillate, and once added were permitted to naturally migrate through the petroleum distillate without any mixing at a temperature of approximately 21°C. The treated liquid was tested for H₂S content thirteen (13) minutes after the treatment solution was added thereto, and the results showed 0 ppm H₂S vapor (as determined by ASTM D5705), < 0.2 ppm mercaptan sulfurs (as determined by UOP163) and < 1.0 ppm of H₂S in liquid (as determined by UOP163). Moreover, the same sample was stored for one month heated to elevated temperatures as high as 148°C and again tested for H₂S content, which showed essentially the same results of 0 ppm H₂S vapor and nearly 0 ppm H₂S in the liquid, confirming that the H₂S remediation by the treatment process is not reversible.

Additional comparative testing was performed on the petroleum distillate before and after treatment pertained to sodium content, as well as HDST - Hydrocarbon Distribution, and Total Light Ends. This comparative testing showed: an increase of sodium content from 2mg/kg before treatment to 40 mg/kg after treatment, which is well within acceptable levels; no adverse effects in the recovery or residue of the petroleum distillate, and appropriate ASTM repeatability for the methods D7169 and D2887; and a slight but desirable increase in hexanes, pentanes and butanes of the Total Light Ends (as determined by ASTM method D7900). The major testing lab which performed the comparative testing further commented that: testing was performed using the most in-depth procedures, including full crude assays, full fractional distillations, etc., and they noted no negative effects, differences or variations on the product or fractions, the fractions balanced out, the fraction boiling points were well within repeatability requirements, the total light ends were slightly improved, and most importantly the H₂S remained mitigated after passage of time and heating to elevated temperatures.

### Example 12

In this Example, the treatment solution used in Examples 1-11 was tested for corrosiveness of aluminum and steel specimens via testing method UNECE Section 37.4. The treatment solution was added to a crude oil with an API gravity of 33° containing 4,000 ppm H₂S vapor at a dosage rate of 10ml / liter of the crude oil (1% based on volume) and allowed to migrate through the crude oil for 30 minutes. Then the specimens were either immersed or half immersed in the treated liquid, or exposed to a gas of the treated crude oil, and in each case the testing lasted for 168 hours. Mass loss of the specimens was detected after 168 and for each tested specimen 0.0% mass loss was detected. Essentially, it was found that the crude oil as treated with approximately 1.5 times the normal dosage of the treatment solution was not corrosive to metals. The tests were also conducted for the crude oil which was treated with higher dosages of the treatment solution, and it was not until the dosage amount was increased to ten times the normal dosage amount that the aluminum specimens began to show some mass loss after 168 hours, e.g., they became slightly pitted. they became slightly pitted.

The foregoing description is given for clearness of understanding only, and no unnecessary limitations should be understood therefrom, as modifications within the scope of the invention may be apparent to those having ordinary skill in the art and are encompassed within the scope of the invention.

## Claims

1. An aqueous based treatment solution for remediating hydrogen sulfide (H₂S) and other contaminants in a liquid and substantially without formation of precipitate, wherein the liquid is a hydrocarbon based liquid, wherein the hydrocarbon based liquid comprises a crude oil; the treatment solution comprising:
at least one hydroxide compound selected from the group of sodium hydroxide (NaOH), potassium hydroxide (KOH), magnesium hydroxide (Mg(OH)₂), manganese hydroxide (Mn(OH)₂), and manganese hydroxide (Mn(OH)₄);
at least one organic acid selected from a group consisting of a fulvic acid and a humic acid; and
water, wherein
a collective concentration of the at least one hydroxide compound in the treatment solution is in a range of 35 - 55 weight %, and
a collective concentration of the at least one organic acid in the treatment solution is at least 0.01 volume %.

2. The treatment solution according to claim 1, wherein the collective concentration of the at least one hydroxide in the solution is at least 45 weight %.

3. The treatment solution according to claim 1, wherein the aqueous solution contains at least two different hydroxide compounds.

4. The treatment solution according to claim 1, wherein the aqueous solution contains sodium hydroxide (NaOH) and potassium hydroxide (KOH) at a ratio of 70 - 99.9 parts NaOH : 0.1 - 30 parts KOH.

5. The treatment solution according to claim 1, wherein the collective concentration of the at least one organic acid in the solution is less than 10 weight percent.

6. The treatment solution according to claim 1, further comprising monoethanolamine (MEA) and a concentration of MEA in the treatment solution is at least 0.05 % volume.

7. The treatment solution according to claim 1, wherein the concentration of MEA in the treatment solution is less than 2.0 % volume.

8. The treatment solution according to claim 1, further comprising at least one of a silicate compound and barium as an antibacterial agent.

9. The treatment solution according to claim 1, wherein the collective concentration of the at least one organic acid in the treatment solution is less than 1.0 % volume.

10. A treatment process for remediating a contaminated liquid containing more than 5 ppm hydrogen sulfide (H₂S) and substantially without formation of precipitate, wherein the contaminated liquid is a hydrocarbon based liquid, wherein the hydrocarbon based liquid comprises a crude oil, comprising steps of:
preparing an aqueous solution containing at least one hydroxide compound selected from the group of sodium hydroxide (NaOH), potassium hydroxide (KOH), magnesium hydroxide (Mg(OH)₂), manganese hydroxide (Mn(OH)₂), and manganese hydroxide (Mn(OH)₄), in which a collective concentration of the at least one hydroxide compound in the aqueous solution is in a range of 35 - 55 wt%;
adding the aqueous solution to the contaminated liquid at a dosage amount within a range of 125-5000 ppm of the at least one hydroxide compound in the contaminated liquid;
adding at least one organic acid to the contaminated liquid at a dosage amount of at least 0.01 ppm of the at least one organic acid in the contaminated liquid; wherein the at least one organic acid includes at least one of a fulvic acid and a humic acid; and
dispersing the aqueous solution and the at least one organic acid in the contaminated liquid and allowing the aqueous solution and the at least one organic acid to react with the contaminated liquid for a period of time until a concentration of hydrogen sulfide in the contaminated liquid is reduced to ≤ 5 ppm.

11. The treatment process according to claim 10, wherein the dosage amount of the aqueous solution added to the contaminated liquid is within a range of 500 - 2500 ppm of the at least one hydroxide compound in the contaminated liquid.

12. The treatment process according to claim 10, wherein the at least one organic acid is added at the dosage amount of 0.1 - 10 ppm in the contaminated liquid.

13. The treatment process according to claim 10, further comprising the step of adding monoethanolamine (MEA) to the contaminated liquid at a concentration of 0.5 - 15 ppm MEA in the contaminated liquid.

14. The treatment process according to claim 10, wherein the aqueous solution contains at least two different hydroxide compounds.

15. The treatment process according to claim 10, further comprising the step of combining the aqueous solution and the at least one organic acid before adding the aqueous solution and the at least one organic acid to the contaminated liquid.

16. The treatment process according to claim 10, wherein the at least on hydroxide compound in the aqueous solution is selected to achieve a specific freezing temperature for the aqueous solution below 0°C.

17. The treatment process according to claim 10, the dosage amounts of the aqueous solution and the at least one organic acid added to the contaminated liquid are adjusted based on at least one of the concentration of hydrogen sulfide in the contaminated liquid, a desired reaction time for reducing the concentration of hydrogen sulfide in the contaminated liquid to ≤ 5 ppm, and a viscosity of the contaminated liquid.

18. The treatment process according to claim 10, wherein the at least on hydroxide compound in the aqueous solution is selected from the group of sodium hydroxide (NaOH) and potassium hydroxide (KOH).

19. The treatment process according to claim 10, wherein the treatment process comprises combining the aqueous solution and the at least one organic acid to obtain the treatment solution according to any one of claims 1-9.

## Patentansprüche

1. Behandlungslösung auf Wasserbasis zur Sanierung von Schwefelwasserstoff (H₂S) und anderen Kontaminationsstoffen in einer Flüssigkeit im Wesentlichen ohne Entstehung von Präzipitat, wobei die Flüssigkeit eine Flüssigkeit auf Kohlenwasserstoffbasis ist, wobei die Flüssigkeit auf Kohlenwasserstoffbasis ein Rohöl umfasst; wobei die Behandlungslösung umfasst:
wenigstens eine Hydroxidverbindung ausgewählt aus der Gruppe von Natriumhydroxid (NaOH), Kaliumhydroxid (KOH), Magnesiumhydroxid (Mg(OH)₂), Manganhydroxid (Mn(OH)₂) und Manganhydroxid (Mn(OH)₄);
wenigstens eine organische Säure ausgewählt aus einer Gruppe bestehend aus einer Fulvinsäure und einer Huminsäure; und Wasser, wobei
eine Gesamtkonzentration der wenigstens einen Hydroxidverbindung in der Behandlungslösung in einem Bereich von 35-55 Gew.-% liegt und
eine Gesamtkonzentration der wenigstens einen organischen Säure in der Behandlungslösung wenigstens 0,01 Vol.-% beträgt.

2. Behandlungslösung gemäß Anspruch 1, wobei die Gesamtkonzentration des wenigstens einen Hydroxids in der Lösung wenigstens 45 Gew.-% beträgt.

3. Behandlungslösung gemäß Anspruch 1, wobei die wässrige Lösung wenigstens zwei verschiedene Hydroxidverbindungen enthält.

4. Behandlungslösung gemäß Anspruch 1, wobei die wässrige Lösung Natriumhydroxid (NaOH) und Kaliumhydroxid (KOH) in einem Verhältnis von 70-99,9 Teile NaOH:0,1-30 Teile KOH enthält.

5. Behandlungslösung gemäß Anspruch 1, wobei die Gesamtkonzentration der wenigstens einen organischen Säure in der Lösung weniger als 10 Gewichtsprozent beträgt.

6. Behandlungslösung gemäß Anspruch 1, ferner umfassend Monoethanolamin (MEA), wobei eine Konzentration von MEA in der Behandlungslösung wenigstens 0,05 Vol.-% beträgt.

7. Behandlungslösung gemäß Anspruch 1, wobei die Konzentration von MEA in der Behandlungslösung weniger als 2,0 Vol.-% beträgt.

8. Behandlungslösung gemäß Anspruch 1, ferner umfassend wenigstens eines von einer Silicatverbindung und Barium als ein antibakterielles Mittel.

9. Behandlungslösung gemäß Anspruch 1, wobei die Gesamtkonzentration der wenigstens einen organischen Säure in der Behandlungslösung weniger als 1,0 Vol.-% beträgt.

10. Behandlungsverfahren zum Sanieren einer kontaminierten Flüssigkeit, die mehr als 5 ppm Schwefelwasserstoff (H₂S) enthält, im Wesentlichen ohne Entstehung von Präzipitat, wobei die kontaminierte Flüssigkeit eine Flüssigkeit auf Kohlenwasserstoffbasis ist, wobei die Flüssigkeit auf Kohlenwasserstoffbasis ein Rohöl umfasst, umfassend die Schritte:
herstellen einer wässrigen Lösung, die wenigstens eine Hydroxidverbindung ausgewählt aus der Gruppe von Natriumhydroxid (NaOH), Kaliumhydroxid (KOH), Magnesiumhydroxid (Mg(OH)₂), Manganhydroxid (Mn(OH)₂) und Manganhydroxid (Mn(OH)₄) umfasst, wobei eine Gesamtkonzentration der wenigstens einen Hydroxidverbindung in der wässrigen Lösung in einem Bereich von 35-55 Gew.-% liegt;
zugeben der wässrigen Lösung zu der kontaminierten Flüssigkeit in einer Dosierungsmenge in einem Bereich von 125-5000 ppm an der wenigstens einen Hydroxidverbindung in der kontaminierten Flüssigkeit;
zugeben wenigstens einer organischen Säure zu der kontaminierten Flüssigkeit in einer Dosierungsmenge von wenigstens 0,01 ppm an der wenigstens einen organischen Säure in der kontaminierten Flüssigkeit; wobei die wenigstens eine organische Säure wenigstens eine von einer Fulvinsäure und einer Huminsäure enthält; und
verteilen der wässrigen Lösung und der wenigstens einen organischen Säure in der kontaminierten Flüssigkeit und erlauben, dass die wässrige Lösung und die wenigstens eine organische Säure mit der kontaminierten Flüssigkeit mit einer Zeitdauer reagieren, bis eine Konzentration von Schwefelwasserstoff in der kontaminierten Flüssigkeit auf ≤ 5 ppm verringert ist.

11. Behandlungsverfahren gemäß Anspruch 10, wobei die Dosierungsmenge der zu der kontaminierten Flüssigkeit zugegebenen wässrigen Lösung in einem Bereich von 500-2500 ppm an der wenigstens einen Hydroxidverbindung in der kontaminierten Flüssigkeit beträgt.

12. Behandlungsverfahren gemäß Anspruch 10, wobei die wenigstens eine organische Säure in der Dosierungsmenge von 0,1-10 ppm in die kontaminierten Flüssigkeit zugegeben wird.

13. Behandlungsverfahren gemäß Anspruch 10, ferner umfassend den Schritt des Zugebens von Monoethanolamin (MEA) zu der kontaminierten Flüssigkeit in einer Konzentration von 0,5-15 ppm MEA in der kontaminierten Flüssigkeit.

14. Behandlungsverfahren gemäß Anspruch 10, wobei die wässrige Lösung wenigstens zwei verschiedene Hydroxidverbindungen enthält.

15. Behandlungsverfahren gemäß Anspruch 10, ferner umfassend den Schritt des Kombinierens der wässrigen Lösung und der wenigstens einen organischen Säure vor Zugeben der wässrigen Lösung und der wenigstens einen organischen Säure zu der kontaminierten Flüssigkeit.

16. Behandlungsverfahren gemäß Anspruch 10, wobei die wenigstens eine Hydroxidverbindung in der wässrigen Lösung ausgewählt ist, um eine spezifische Gefriertemperatur für die wässrige Lösung unter 0 °C zu erzielen.

17. Behandlungsverfahren gemäß Anspruch 10, wobei die Dosierungsmengen der wässrigen Lösung und der wenigstens einen organischen Säure, die zu der kontaminierten Flüssigkeit zugegeben werden, auf der Grundlage von wenigstens einem von der Konzentration von Schwefelwasserstoff in der kontaminierten Flüssigkeit, einer gewünschten Reaktionszeit zum Verringern der Konzentration von Schwefelwasserstoff in der kontaminierten Flüssigkeit auf ≤ 5 ppm und einer Viskosität der kontaminierten Flüssigkeit eingestellt wird.

18. Behandlungsverfahren gemäß Anspruch 10, wobei die wenigstens eine Hydroxidverbindung in der wässrigen Lösung ausgewählt ist aus der Gruppe von Natriumhydroxid (NaOH) und Kaliumhydroxid (KOH).

19. Behandlungsverfahren gemäß Anspruch 10, wobei das Behandlungsverfahren Kombinieren der wässrigen Lösung und der wenigstens einen organischen Säure umfasst, um die Behandlungslösung gemäß einem der Ansprüche 1-9 zu erhalten.

## Revendications

1. Solution de traitement à base aqueuse pour remédiation de sulfure d'hydrogène (H₂S) et d'autres contaminants dans un liquide et sensiblement sans formation de précipité, le liquide étant un liquide à base d'hydrocarbures, le liquide à base d'hydrocarbures comprenant une huile brute ; la solution de traitement comprenant :
au moins un composé d'hydroxyde choisi dans le groupe de l'hydroxyde de sodium (NaOH), l'hydroxyde de potassium (KOH), l'hydroxyde de magnésium (Mg(OH)₂), l'hydroxyde de manganèse (Mn(OH)₂) et l'hydroxyde de manganèse (Mn(OH)₄) ;
au moins un acide organique choisi dans un groupe constitué par un acide fulvique et un acide humique ; et de l'eau, dans quoi
une concentration collective de l'au moins un composé d'hydroxyde dans la solution de traitement étant dans une plage de 35 - 55 % en poids, et
une concentration collective de l'au moins un acide organique dans la solution de traitement étant d'au moins 0,01 % en volume.

2. Solution de traitement selon la revendication 1, dans quoi la concentration collective de l'au moins un hydroxyde dans la solution étant d'au moins 45 % en poids.

3. Solution de traitement selon la revendication 1, dans quoi la solution aqueuse contenant au moins deux composés d'hydroxyde différents.

4. Solution de traitement selon la revendication 1, dans quoi la solution aqueuse contenant de l'hydroxyde de sodium (NaOH) et de l'hydroxyde de potassium (KOH) à raison d'un rapport de 70 - 99,9 parties de NaOH : 0,1 - 30 parties de KOH.

5. Solution de traitement selon la revendication 1, dans quoi la concentration collective de l'au moins un acide organique dans la solution étant inférieure à 10 pour cent en poids.

6. Solution de traitement selon la revendication 1, comprenant en outre de la monoéthanolamine (MEA) et une concentration de MEA dans la solution de traitement étant d'au moins 0,05 % en volume.

7. Solution de traitement selon la revendication 1, dans quoi la concentration de MEA dans la solution de traitement étant inférieure à 2,0 % en volume.

8. Solution de traitement selon la revendication 1, comprenant en outre au moins l'un parmi un composé de silicate et du baryum en tant qu'un agent antibactérien.

9. Solution de traitement selon la revendication 1, dans quoi la concentration collective de l'au moins un acide organique dans la solution de traitement étant inférieure à 1,0 % en volume.

10. Procédé de traitement pour remédiation d'un liquide contaminé contenant plus de 5 ppm de sulfure d'hydrogène (H₂S) et sensiblement sans formation de précipité, le liquide contaminé étant un liquide à base d'hydrocarbures, le liquide à base d'hydrocarbures comprenant une huile brute, comprenant des étapes de :
préparation d'une solution aqueuse contenant au moins un composé d'hydroxyde choisi dans le groupe de l'hydroxyde de sodium (NaOH), l'hydroxyde de potassium (KOH), l'hydroxyde de magnésium (Mg(OH)₂), l'hydroxyde de manganèse (Mn(OH)₂) et l'hydroxyde de manganèse (Mn(OH)₄), dans laquelle une concentration collective de l'au moins un composé d'hydroxyde dans la solution aqueuse est dans une plage de 35 - 55 % en poids ;
ajout de la solution aqueuse au liquide contaminé à raison d'une quantité de dosage à l'intérieur d'une plage de 125 - 5 000 ppm de l'au moins un composé d'hydroxyde dans le liquide contaminé ;
ajout d'au moins un acide organique au liquide contaminé à raison d'une quantité de dosage d'au moins 0,01 ppm de l'au moins un acide organique dans le liquide contaminé ; l'au moins un acide organique comprenant au moins l'un parmi un acide fulvique et un acide humique ; et
dispersion de la solution aqueuse et de l'au moins un acide organique dans le liquide contaminé et le fait de laisser la solution aqueuse et l'au moins un acide organique à réagir avec le liquide contaminé pendant une période de temps jusqu'à ce qu'une concentration de sulfure d'hydrogène dans le liquide contaminé soit réduite jusqu'à ≤ 5 ppm.

11. Procédé de traitement selon la revendication 10, dans quoi la quantité de dosage de la solution aqueuse ajoutée au liquide contaminé étant à l'intérieur d'une plage de 500 - 2 500 ppm de l'au moins un composé d'hydroxyde dans le liquide contaminé.

12. Procédé de traitement selon la revendication 10, dans quoi l'au moins un acide organique étant ajouté à la quantité de dosage de 0,1 - 10 ppm dans le liquide contaminé.

13. Procédé de traitement selon la revendication 10, comprenant en outre l'étape d'ajout de monoéthanolamine (MEA) au liquide contaminé à une concentration de 0,5 - 15 ppm de MEA dans le liquide contaminé.

14. Procédé de traitement selon la revendication 10, dans quoi la solution aqueuse contenant au moins deux composés d'hydroxyde différents.

15. Procédé de traitement selon la revendication 10, comprenant en outre l'étape de combinaison de la solution aqueuse et de l'au moins un acide organique avant un ajout de la solution aqueuse et de l'au moins un acide organique au liquide contaminé.

16. Procédé de traitement selon la revendication 10, dans quoi l'au moins un composé d'hydroxyde dans la solution aqueuse étant choisi pour atteindre une température de congélation spécifique pour la solution aqueuse inférieure à 0 °C.

17. Procédé de traitement selon la revendication 10, les quantités de dosage de la solution aqueuse et de l'au moins un acide organique ajoutés au liquide contaminé étant ajustées sur la base d'au moins l'une parmi la concentration de sulfure d'hydrogène dans le liquide contaminé, un temps de réaction souhaité pour la réduction de la concentration de sulfure d'hydrogène dans le liquide contaminé jusqu'à ≤ 5 ppm, et une viscosité du liquide contaminé.

18. Procédé de traitement selon la revendication 10, dans quoi l'au moins un composé d'hydroxyde dans la solution aqueuse étant choisi dans le groupe de l'hydroxyde de sodium (NaOH) et de l'hydroxyde de potassium (KOH).

19. Procédé de traitement selon la revendication 10, le procédé de traitement comprenant une combinaison de la solution aqueuse et de l'au moins un acide organique pour obtenir la solution de traitement selon l'une quelconque des revendications 1 - 9.
